# EUROPEAN PATENT SPECIFICATION

(11) **EP 0 967 906 B1**
(45) Date of publication and mention of the grant of the patent: **13.08.2003**
(21) Application number: 98913930.8
(22) Date of filing: 27.03.1998
(51) Int. Cl.: A47J 37/07

(54) **COOKING METHOD AND APPARATUS**
KOCH-METHODE UND APPARAT
PROCEDE ET APPAREIL DE CUISSON

(30) Priority: 01.04.1997 GB 9706539; 05.06.1997 GB 9711590; 27.11.1997 GB 9725065
(43) Date of publication of application: 05.01.2000
(73) Proprietor: Vaughan, Nicholas John, Romford, Essex RM2 5EL (GB)
(72) Inventor: Vaughan, Nicholas John, Romford, Essex RM2 5EL (GB)
(74) Representative: Eder, Ephry
(86) International application number: GB9800936
(87) International publication number: WO98043519

(56) References cited:
- US-A- 3 276 440
- US-A- 3 495 524
- US-A- 5 517 902

## Description

### Technical Field

This invention relates to cooking apparatus and methods of cooking.

### Background Art

It is known to cook foodstuffs by grilling them over a heat source, e.g. an open fire provided, for example, by burning charcoal, coal or other pyrogenous material in a barbecue. It is also known to effect such grilling, particularly barbecue grilling, by impaling the foodstuff on skewers that are positioned above the heat source and allowing the heat to embrace the impaled foodstuff. Examples of such known arrangements are disclosed in US-A-3495524, US-A-3276440 and US-A-5517902. It is often difficult to ensure proper and even cooking of foodstuffs by these methods and it is considered desirable to overcome these and/or other difficulties arising from the apparatus and methods of the prior art.

### Summary of the Invention

According to a first aspect of this invention there is provided a method of cooking foodstuff items impaled on skewers wherein the skewers are disposed in a substantially upright attitude upon or above a heat source and are surrounded by a hollow chamber provided with an open bottom above the heat source and with an open top from which handles of the skewers extend.

Preferably the lower ends of the skewers rest on the heat source.

According to another aspect of this invention there is provided apparatus for use in a method according to said first aspect of the invention, said apparatus comprising a hollow chamber having an open upper end and an open lower end, the lower opening being for disposition proximal to and above (preferably upon) the heat source and having a cross-sectional area greater than that of the upper opening, and further comprising a plurality of skewers having a length commensurate with (preferably greater than) the height of the hollow chamber between its upper and lower ends.

The hollow chamber may be of metal or of clay or other suitable ceramic material.

Preferably the wall of the said chamber is of substantially uniform cross-section such that the wall is of substantially constant thickness and its exterior surface - facing the ambient environment for contact with the outside air - conforms to its interior surface.

Advantageously the skewers are hollow along at least the majority of their length. This is to enhance heat transfer from the heat source to the foodstuff impaled on each skewer.

For example the chamber may have the following dimensions:
- height: in the range 44 to 54 cms, preferably 49 cms;
- maximum diameter: in the range 31 to 41 cms, preferably 36 cms;
- diameter of top aperture: in the range 10 to 20 cms, preferably 15 cms;
- diameter of bottom aperture: in the range 25 to 36 cms, preferably 30 cms; and the distance from the top aperture to the chamber's transverse plane containing its maximum diameter being approximately half, preferably slightly less than half, the chamber's height.

Optionally, the hollow chamber may be provided with one or more external handles whereby the chamber may be lifted onto and/or removed from off the heat source.

Additionally or alternatively a lid may be provided for the open upper end of the hollow chamber. The lid may be multi-apertured, the apertures permitting the extension therethrough of (the) skewers. The apertures may, for example, be of triangular shape.

Alternatively, the lid may fully cover the area of the open upper end, the latter being provided with slot-like apertures through which the skewers can extend.

In one example of the invention, a vent may be provided in the wall of the hollow chamber adjacent its open lower end. Advantageously this vent may be adjustable, e.g. being selectively either open or closed (preferably having one or more openings of which the effective size is variable by regulating means).

According to a third aspect of this invention there is provided a hollow cooking chamber *per se* for use - with skewers and a barbecue apparatus that includes an enclosure to contain a heat source- in a method according to said first aspect of the invention, **characterised in tha**t said hollow chamber is a one-piece unit that has an open upper end through which the skewers can pass, and an open lower end for disposition - in close proximity above the heat source - upon or within the boundary of the upper mouth of said enclosure to permit heat from the heat source to pass through the opening at said lower end and into said hollow chamber during said cooking method, said lower end opening having a dimension corresponding substantially to the full diametric extent of the lower end; **in that** said hollow chamber is completely demountable and removable away from the the heat source - to leave the barbecue apparatus with the enclosure's mouth fully open and available for use substantially in that state as apparatus for cooking foodstuffs in a first mode - but be replaceable upon or within the boundary of said upper mouth of the enclosure to convert the apparatus to a second state for utilisation in cooking foodstuffs in an alternative second mode that comprises a cooking method according to said first aspect of the invention; **and in that** said hollow chamber has a cross-sectional area at an intermediate height location that is greater than at the upper end such that the hollow chamber on its own, or in conjunction with the enclosure when the chamber is seated on the boundary of the enclosure's mouth, presents a bulbous form within which said second mode of cooking - in a method according to said first aspect of the invention - can occur.

Apparatus comprising such a hollow chamber may have the open upper end of the hollow chamber defined by a boundary surface including a plurality of indentations which, in use, provide lateral rests for skewers inserted through the upper end to adopt a generally upright attitude with the bottom tips of the skewers upon or above the heat source.

### Brief Description of the Drawings

By way of example two embodiments of this invention will now be described with reference to the accompanying drawings of which:
Figure 1 is a schematic vertical cross-sectional view through cooking apparatus according to one embodiment of this invention, and
Figure 2 is a similar view of cooking apparatus according to a second embodiment of this invention.

### Detailed Description of Example(s) of the Invention

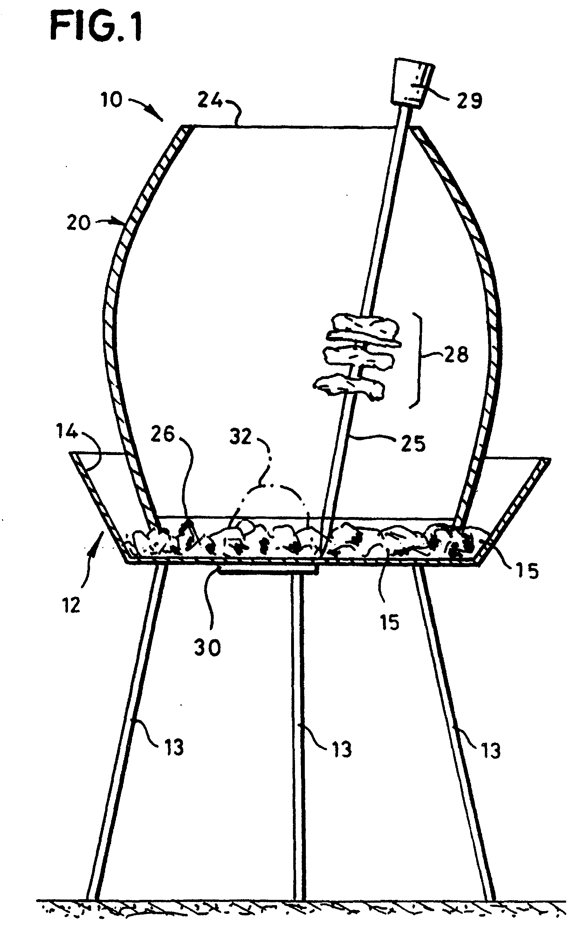

The illustrated apparatus 10 of Fig 1 comprises a barbecue 12 and accessory 20 therefor. The barbecue comprises a brazier dish 14 supported by three equi-angularly spaced legs 13. For use, either alone as a barbecue, or together with the accessory 20, charcoal or like pyrogenous material 15 is placed within the brazier dish 14 and ignited. The accessory 20 is a hollow structure which defines a chamber 22 of generally barrel-shaped form and is in use removably supported by the pyrogenous material 15 in the brazier dish 14.

This hollow structure 20 is of an unglazed, unfired clay or other ceramic material resistant to fire and heat, preferably reinforced with hessian or other suitable strengthening fibres. After forming from the fibre-reinforced clay or other ceramic material, the hollow structure may be left to dry slowly, e.g. in a naturally warm or hot environment. Alternatively, the hollow structure 20 may be made of metal (e.g. enamelled with a heat-resistant vitreous finish) or of a combination of (such) metal and ceramic materials. The thickness of the chamber wall is of substantially uniform cross-section such that the wall's exterior surface facing the ambient environment, i.e. the outside air, is generally conformingly parallel to its interior surface.

The hollow structure 20 is open at each end and, in this example, is approximately 40cm high. The circular upper opening 24 of chamber 22 is approximately 15 cms in diameter, and the circular lower opening 26 of chamber 22 - which is larger than the upper opening 24 - is approximately 30 cms in diameter. The maximum diameter of the generally barrel-shaped chamber 22 is approximately 38 cms and is located slightly above the horizontal plane lying mid-way between the upper and lower openings 24,26.

For use, charcoal or pyrogenous material 15 is placed in the brazier dish 14 of the barbecue 12, with the structure 20 removed, and this material is then ignited. The hollow structure 20 is then placed on top of the burning material 15. Foodstuff items 28 that are to be cooked (e.g. meat and/or fish) - which optionally may have been previously steeped in a marinade - are pushed onto metal skewers 25 having heat-insulated handles 29. These skewers 25 are then inserted through the structure's top opening 24 to rest stationary with their pointed lower ends on the charcoal or pyrogenous material 15 and to lie, in a slightly inclined but generally upright attitude, against the bounding rim of the opening 24 (with their handles 29 projecting to the outside). The heat from the burning material 15 is conducted along the metal skewers 25 to cook the foodstuff items 28 internally, whilst the radiated and convected heat from the charcoal or other pyrogenous material 15 is imparted to the exterior of the foodstuff items 28 to cook them - and additionally to flavour them when the charcoal or other pyrogenous material 15 is of an aromatic nature. The metal skewers 25 may optionally be hollow along at least the majority of their length to enhance heat transfer from the heat source to the foodstuff items 28 impaled thereon.

Breads can also be cooked in the above-described apparatus by adhering the flattened cakes of dough to the internal wall surface of the hollow chamber 20.

If the air supply to the burning material 15 needs to be improved, the barbecue 12 may be modified to incorporate a vent 30 in the bottom wall of brazier 14, and this vent may be adjustable to vary the airflow therethrough. Such a vent 30 may comprise first and second superimposed elements each provided with a like regular array of openings having between them non-apertured zones dimensioned similarly to the openings whereby, in one extreme position the openings of one element are in registry with the openings of the other element, and in another extreme position the openings of one element are occluded by the non-apertured zones of the other element. With such a vent formation, the vent can be selectively fully open, or fully closed, or partially open in a regulatable manner by varying the areas of the openings that are mutually superimposed.

Alternatively or additionally, and for the same purpose, the hollow structure 20 may be formed with a permanent opening, e.g. as at 32, in its side wall at or adjacent to its bottom. This opening may be either contigous with or separate from the bottom opening 26 provided on the hollow structure 20.

It will be appreciated that, apart from use in the manner described above, the hollow structure 20 may be removed to permit the barbecue to be used alone in a conventional way with foodstuff items being placed directly on burning material 15 or upon an intervening grille (not shown) - the latter being removed when use with the hollow structure 20 is desired. It will thus be appreciated that the hollow structure 20 can be made and/or sold separately for use with an existing barbecue (e.g. a fixed brick-built barbecue), or can be made and/or sold in conjunction with a barbecue as a combination (suitable for the multiple types of use described above by way of example). In the latter case the structure 20 may be configured such that its lower end can be fittingly received within the barbecue's brazier dish.

It will be appreciated that the hollow structure 20 may be of fired clay (reinforced or not) rather than non-fired, or of metal, or can be of some other suitable heat-resistant material. Furthermore the hollow structure 20 can alternatively, or additionally, be used in conjunction with a cooking heat source other than a conventional barbecue - one example being a gas burner.

It will also be appreciated that the hollow chamber may be provided with one or more external handles whereby the chamber may be lifted onto and/or removed from off the heat source.

Additionally or alternatively a multi-apertured lid may be provided for the open upper end of the hollow chamber, the apertures permitting the extension therethrough of the skewers 25. The apertures in the lid may, for example, be of triangular shape. As an alternative to this feature, the lid may extend fully over the area of the open upper end, the latter having slot-like apertures in its boundary through which the skewers can extend.

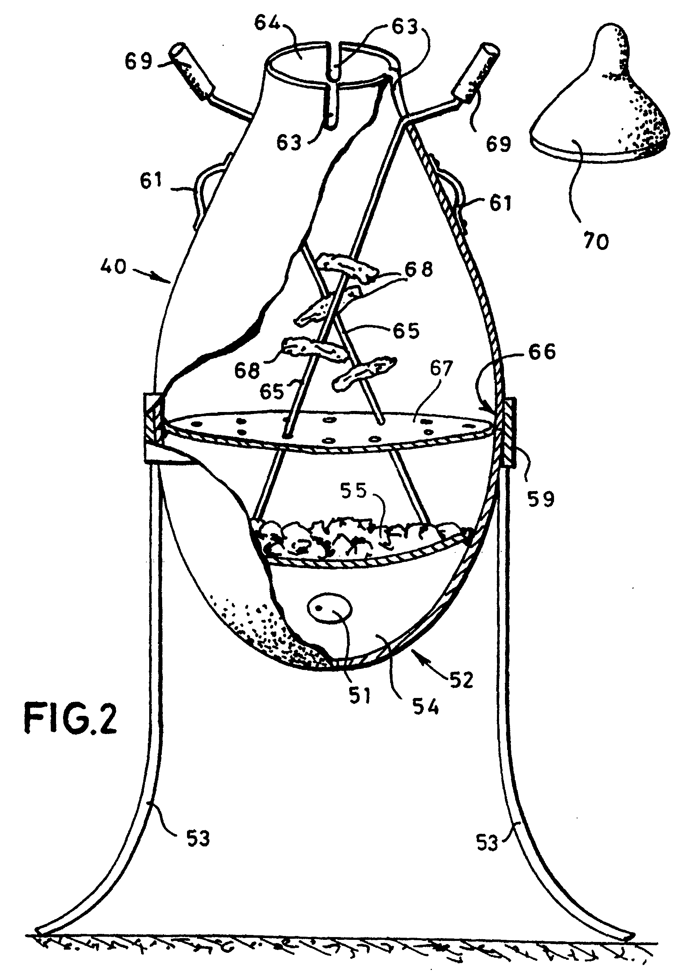

The illustrated apparatus 40 of Fig 2 comprises a barbecue 52 which comprises a bowl-shaped brazier dish 54 supported (e.g. approximately 40cm from the ground) by three equi-angularly spaced legs 53. The barbecue 52 can be used alone in a conventional manner or, in accord with this invention, with an accessory 60 comprising a hollow tapering structure removably attached to the rim of the bowl-shaped brazier dish 54 by a coupling 59 so as to define, with dish 54, a chamber 62 of generally barrel-shaped form. The coupling 50 allows the accessory 60 to be removably placed above the pyrogenous material 55 (in brazier dish 54) after the latter has been ignited.

This hollow structure 60 is made of metal (e.g. enamelled with a heat-resistant vitreous finish) or of a combination of (such) metal and ceramic materials. The thickness of the chamber wall is of substantially uniform cross-section such that the wall's exterior surface facing the ambient environment, i.e. facing the outside air, is generally conformingly parallel to its interior surface.

The hollow structure 60 is open at each end and in this example, is approximately 49cm in height. The circular upper opening 64 of chamber 62 is defined by a tubular neck approximately 5cm high and 15cms in diameter, and the circular lower opening 66 of chamber 22 - which is larger than the upper opening 64 - is approximately 30cms in diameter, this being approximately the maximum diameter of the generally bowl-shaped brazier dish 54.

A removable grille or like multi-apertured, disc-like plate 67 is provided at the join between brazier dish 54 and the chimney-like structure 60 - approximately 11cm above the top of the pyrogenous material 55 in brazier 54.

For use, charcoal or pyrogenous material 55 is placed in the brazier dish 54 of the barbecue 52, with the structure 60 and plate 67 removed, and this pyrogenous material is then ignited. The plate 67 and hollow structure 60 are then placed on top of the dish 54 so as to be located - and fixed by coupling 59 - above the burning material 55. Foodstuff items 68 that are to be cooked (e.g. meat, and/or fish) - which optionally may have been previously steeped in a marinade - are pushed onto metal skewers 65. These skewers 65, which have heat-insulated handles 69 provided as a dog-leg or cranked extension of the elongate metal shaft of the skewers, are then inserted through the structure's top opening 24 to rest with their pointed lower ends on the charcoal or pyrogenous material 55 and to lie stationary, in a generally upright and inclined attitude, against the bounding rim of the opening 24 (with their handles 69 projecting to the outside). Optionally, the neck that defines the upper opening 64 may be provided with slot-like apertures 63 to retain the skewers in position.

The heat from the burning material 55 is conducted along the metal skewers 65 to cook the foodstuff items 68 internally, whilst the radiated and convected heat from the charcoal or other pyrogenous material 55 is imparted to the exterior of the foodstuff items 68 to cook them - and additionally to flavour them when the charcoal or other pyrogenous material 55 is of-an aromatic nature. The metal shafts of the skewers 65 may optionally be hollow along at least the majority of their length to enhance heat transfer from the heat source to the foodstuff items 68 impaled thereon.

If the air supply to the burning material 55 needs to be improved, the barbecue 62 may be modified to incorporate a vent 51 in the bottom wall of brazier 54, and this vent may be adjustable to vary the airflow therethrough. Such a vent 51 may comprise first and second superimposed elements each provided with a like regular array of openings having between them non-apertured zones dimensioned similarly to the openings whereby, in one extreme position the openings of one element are in registry with the openings of the other element, and in another extreme position the openings of one element are occluded by the non-apertured zones of the other element. With such a vent formation, the vent can be selectively fully open, or fully closed, or partially open in a regulatable manner by varying the areas of the openings that are mutually superimposed.

It will be appreciated that, apart from use in the manner described above, the hollow structure 60 may be removed to permit the barbecue to be used alone in a conventional way with foodstuff items being placed directly on burning material 55 or upon grille 67. It will thus be appreciated that the hollow structure 60 can be made and/or sold separately as an accessory, for use with an existing presold barbecue, or can be made and/or sold in conjunction with a barbecue as a combination (suitable for the multiple types of use described above by way of example). In the latter case the structure 60 may be configured such that its lower end can be fittingly mounted on the barbecue's brazier dish.

It will be appreciated that the hollow structure 60 may be used in conjunction with a cooking heat source other than a conventional barbecue - one example being a gas burner.

It will also be appreciated that the hollow chamber 60 may be provided with one or more external handles 61 whereby the chamber may be lifted onto and/or removed from off the heat source.

Additionally or alternatively a lid 70 may be provided for the open upper end 64 of hollow chamber 62. The lid 70 fits into the neck 64 and extends fully over the area of the open upper end, the latter having slot-like apertures 63 in its boundary through which the skewers can extend.

In one alternative construction, the accessory 20 or 60 may be provided integral with, and non-separable from, the heat source 12 or 52 (shown in Figs 1 and 2 as a barbecue). Such an arrangement is considered particularly feasible, say, where the heat source is provided by a gas burner.

In yet another alternative, the pyrogenous material (gas, charcoal, wood or the like) is ignited after the accessory 20 or 60 is in position.

Other modifications and embodiments of the invention, which will be readily apparent to those skilled in this art, are to be deemed within the ambit and scope of the invention defined in the following Claims, and the particular embodiment(s) hereinbefore described may be varied in construction and detail, e.g. by interchanging (where appropriate or desired) different features of each, without departing from the scope of the patent monopoly expressed by these Claims. Thus, for example, the skewers 65 of Figure 2 may have in-line handles such as 29 rather than the cranked handles 69 illustrated.

## Claims

1. A method of cooking foodstuff items (28;68) impaled on skewers (25;65) **characterised in that** the skewers (25;65) are disposed in a substantially upright attitude upon or above a heat source (12;52) and **in that** the skewers (25;65) are surrounded by a hollow chamber (20;40) provided with an open bottom (26) above the heat source (12;52) and with an open top (24;64) from which handles of the skewers (25;65) extend.

2. A method according to Claim 1 wherein the lower ends of the skewers (25;65) rest on the heat source (12;52).

3. Apparatus for use in a method according to Claim 1 or Claim 2, said apparatus comprising a hollow chamber (20;40) having an open upper end (24;64) and an open lower end (26), the lower opening (26) being for disposition proximal to and above the heat source (12;52) and having a cross-sectional area greater than that of the upper opening (24;64), and further comprising a plurality of skewers (25;65) having a length commensurate with the height of the hollow chamber (20;40) between its upper and lower ends (24,26; 64)

4. Apparatus according to Claim 3 **characterised in that** the hollow chamber (20;40) is provided as an accessory removably mountable on cooking apparatus providing the heat source (12;52).

5. Apparatus according to Claim 4 wherein said cooking apparatus is a barbecue.

6. Apparatus according to any one of Claims 3 to 5, wherein said heat source (12;52) is provided by pyrogenous material (15;55).

7. Apparatus according to any one of Claims 3 to 6, wherein the hollow chamber (20;40) is of metal.

8. Apparatus according to any one of Claims 3 to 6, wherein the hollow chamber (20;40) is of clay or other suitable ceramic material.

9. Apparatus according to any one of Claims 3 to 8, wherein the cross-sectional area of the chamber (20;40) increases as the chamber wall extends downwardly from the upper end (24;64).

10. Apparatus according to any one of Claims 3 to 9, wherein the cross-sectional area of the chamber (20;40) is greater at an intermediate height location between the upper end (24;64) and the lower end (26) to provide the chamber (20;40) with a bulbous form.

11. Apparatus according to any one of Claims 3 to 9, wherein the cross-sectional area of the chamber (20;40) is greater at an intermediate height location between the chamber's upper end (24;64) and the level of the heat source (15;55).

12. Apparatus according to any one of Claims 3 to 11, wherein the wall of the chamber (20;40) is of substantially uniform cross-section such that the wall is of substantially constant thickness and its exterior surface - facing the ambient environment for contact with the outside air - conforms to its interior surface.

13. Apparatus according to any one of Claims 3 to 12, wherein the skewers (25;65) are hollow along at least the majority of their length.

14. Apparatus according to any one of Claims 3 to 13, wherein the chamber (20;40) has the following dimensions:
- height: in the range 35 to 46 cms, preferably 40 cms;
- maximum diameter: in the range 33 to 43 cms, preferably 38 cms;
- diameter of top aperture (24;64): in the range 18 to 28 cms, preferably 23 cms;
- diameter of bottom aperture (26): in the range 25 to 36 cms, preferably 30 cms;
and wherein the distance from the top aperture (24;64) to the chamber's transverse plane containing its maximum diameter is approximately half, preferably slightly less than half, the chamber's height.

15. Apparatus according to any one of Claims 3 to 14, wherein the hollow chamber (20;40) is provided with one or more external handles (61) whereby the chamber (20;40) may be lifted onto and/or removed from off the heat source (12;52).

16. Apparatus according to any one of Claims 3 to 15, wherein a lid (70) is provided for the open upper end (24;64) of the hollow chamber (20;40).

17. Apparatus according to Claim 16, wherein slot-like apertures (63) are provided in the boundary of the upper opening (64) to permit the extension therethrough of the skewers (25;65).

18. Apparatus according to Claim 16, wherein the lid (70) is multi-apertured, the apertures permitting the extension therethrough of the skewers (25;65).

19. Apparatus according to Claim 18, wherein the apertures are of triangular shape.

20. Apparatus according to any one of Claims 3 to 19, wherein a vent (30) is provided in the wall of the hollow chamber (20;40) adjacent its open lower end (26).

21. Apparatus according to Claim 20, wherein the vent (30) is adjustable.

22. Apparatus according to Claim 21, wherein the adjustable vent (30) is selectively either open or closed.

23. Apparatus according to Claim 21 or Claim 22, wherein the adjustable vent (30) has one or more openings (32) and is provided with regulating means to vary the effective size of its said opening(s) (32).

24. A hollow cooking chamber (20;40) *per se* for use - with skewers (25;65) and a barbecue apparatus that includes an enclosure (14) to contain a heat source (12;52) - in a method according to Claim 1 or Claim 2,
**characterised in that** said hollow chamber (20;40) is a one-piece unit that has an open upper end (24;64) through which the skewers (25;65) can pass, and an open lower end (26) for disposition - in close proximity above the heat source (12;52) - upon or within the boundary of the upper mouth of said enclosure (14) to permit heat from the heat source to pass through the opening at said lower end and into said hollow chamber during said cooking method, said lower end opening having a dimension corresponding substantially to the full diametric extent of the lower end (26);
**in that** said hollow chamber (20;40) is completely demountable and removable away from the the heat source (12;52) - to leave the barbecue apparatus with the enclosure's mouth fully open and available for use substantially **in that** state as apparatus for cooking foodstuffs in a first mode - but be replaceable upon or within the boundary of said upper mouth of the enclosure (14) to convert the apparatus to a second state for utilisation in cooking foodstuffs in an alternative second mode that comprises a cooking method according to Claim 1 or Claim 2;
**and in that** said hollow chamber (20;40) has a cross-sectional area at an intermediate height location that is greater than at the upper end (24;64) such that the hollow chamber on its own, or in conjunction with the enclosure (14) when the chamber is seated on the boundary of the enclosure's mouth, presents a bulbous form within which said second mode of cooking - in a method according to Claim 1 or Claim 2 - can occur.

25. Cooking apparatus comprising a hollow chamber (20;40) according to Claim 24, wherein the open upper end (24;64) of the hollow chamber (20;40) has a boundary surface including a plurality of indentations which, in use, provide lateral rests for skewers (25;65) inserted through the upper end (24;64) to adopt a generally upright attitude with the bottom tips of the skewers (25;65) upon or above the heat source (15;55).

## Patentansprüche

1. Verfahren zum Garen von Nahrungsmitteln (28; 68), die auf Spießen (25; 65) aufgespießt sind, **dadurch gekennzeichnet, dass** die Spieße (25; 65) in einer im Wesentlichen senkrechten Stellung auf oder über einer Hitzequelle (12; 52) angeordnet sind und dass die Spieße (25; 65) von einem Hohlgefäß (20; 40) umgeben sind, das mit einer offenen Unterseite (26), die sich über der Hitzequelle (12; 52) befindet, und mit einer offenen Oberseite (24; 64), von der aus sich Handgriffe der Spieße (25; 65) erstrecken, versehen ist.

2. Verfahren nach Anspruch 1, **dadurch gekennzeichnet, dass** die unteren Enden der Spieße (25; 65) auf der Hitzequelle (12; 52) aufliegen.

3. Vorrichtung zur Verwendung in einem Verfahren nach Anspruch 1 oder Anspruch 2, wobei die Vorrichtung ein Hohlgefäß (20; 40) umfasst, das ein offenes oberes Ende (24; 64) und ein offenes unteres Ende (26) aufweist, wobei die untere Öffnung (26) für eine Anordnung nahe und über der Hitzequelle (12; 52) vorgesehen ist und eine Querschnittsfläche aufweist, die größer ist als die der oberen Öffnung (24; 64), und weiterhin eine Vielzahl von Spießen (25; 65) umfasst, deren Länge der Höhe des Hohlgefäßes (20; 40) zwischen dem oberen und unteren Ende (24, 26; 64) desselben entspricht.

4. Vorrichtung nach Anspruch 3, **dadurch gekennzeichnet, dass** das Hohlgefäß (20; 40) als Zubehörteil vorgesehen ist, das entfembar auf einer Garvorrichtung anbringbar ist, welche die Hitzequelle (12; 52) bereitstellt.

5. Vorrichtung nach Anspruch 4, **dadurch gekennzeichnet, dass** die Garvorrichtung ein Grill ist.

6. Vorrichtung nach einem der Ansprüche 3 bis 5, **dadurch gekennzeichnet, dass** die Hitzequelle (12; 52) durch pyrogenes Material (15; 55) bereitgestellt wird.

7. Vorrichtung nach einem der Ansprüche 3 bis 6, **dadurch gekennzeichnet, dass** das Hohlgefäß (20; 40) aus Metall besteht.

8. Verfahren nach einem der Ansprüche 3 bis 6, **dadurch gekennzeichnet, dass** das Hohlgefäß (20; 40) aus Ton oder einem anderen geeigneten keramischen Material besteht.

9. Vorrichtung nach einem der Ansprüche 3 bis 8, **dadurch gekennzeichnet, dass** die Querschnittsfläche des Gefäßes (20; 40) im Zuge des Verlaufes der Gefäßwand vom oberen Ende (24; 64) nach unten größer wird.

10. Vorrichtung nach einem der Ansprüche 3 bis 9, **dadurch gekennzeichnet, dass** die Querschnittsfläche des Gefäßes (20; 40) an einer in mittlerer Höhe zwischen dem oberen Ende (24; 64) und dem unteren Ende (26) befindlichen Stelle größer ist, so dass das Gefäß (20; 40) eine bauchige Form erhält.

11. Vorrichtung nach einem der Ansprüche 3 bis 9, **dadurch gekennzeichnet, dass** die Querschnittsfläche des Gefäßes (20; 40) an einer in mittlerer Höhe zwischen dem oberen Ende (24; 64) des Gefäßes und der Ebene der Hitzequelle (15; 55) befindlichen Stelle größer ist.

12. Vorrichtung nach einem der Ansprüche 3 bis 11, **dadurch gekennzeichnet, dass** die Wand des Gefäßes (20; 40) einen im Wesentlichen einheitlichen Querschnitt aufweist, so dass die Wand eine im Wesentlichen konstante Dicke aufweist und ihre äußere Oberfläche, die in Richtung der Umgebung weist und dem Kontakt mit der Außenluft dient, der inneren Oberfläche entspricht.

13. Vorrichtung nach einem der Ansprüche 3 bis 12, **dadurch gekennzeichnet, dass** die Spieße (25; 65) zumindest über den größten Teil ihrer längs hohl sind.

14. Vorrichtung nach einem der Ansprüche 3 bis 13, **dadurch gekennzeichnet, dass** das Gefäß (20; 40) die folgenden Abmessungen aufweist;
- Höhe: 35 bis 46 cm, vorzugsweise 40 cm;
- größter Durchmesser: 33 bis 43 cm, vorzugsweise 38 cm;
- Durchmesser der oberen Öffnung (24; 64); 18 bis 28 cm, vorzugsweise 23 cm;
- Durchmesser der unteren Öffnung (26); 25 bis 36 cm, vorzugsweise 30 cm;
und **dadurch gekennzeichnet, dass** der Abstand zwischen der oberen Öffnung (24; 64) und der horizontalen Ebene des Gefäßes, in welcher der Durchmesser desselben am größten ist, etwa der Hälfte, vorzugsweise etwas weniger als der Hälfte, der Gefäßhöhe entspricht.

15. Vorrichtung nach einem der Ansprüche 3 bis 14, **dadurch gekennzeichnet, dass** das Hohlgefäß (20; 40) mit einem oder mehreren äußeren Handgriff(en) (61) versehen ist, mittels dessen/derer das Gefäß (20; 40) auf die Hitzequelle (12; 52) gehoben und/oder von derselben entfernt werden kann.

16. Vorrichtung nach einem der Ansprüche 3 bis 15, **dadurch gekennzeichnet, dass** für das offene obere Ende (24; 64) des Hohlgefäßes (20; 40) ein Deckel (70) vorgesehen ist.

17. Vorrichtung nach Anspruch 16, **dadurch gekennzeichnet, dass** im Rand der oberen Öffnung (64) schlitzartige Öffnungen (63) vorgesehen sind, durch die sich die Spieße (25; 65) erstrecken können.

18. Vorrichtung nach Anspruch 16, **dadurch gekennzeichnet, dass** der Deckel (70) eine Vielzahl von Öffnungen aufweist, die so gestaltet sind, dass sich die Spieße (25; 65) durch die Öffnungen erstrecken können.

19. Vorrichtung nach Anspruch 18, **dadurch gekennzeichnet, dass** die Öffnungen dreieckig sind.

20. Vorrichtung nach einem der Ansprüche 3 bis 19, **dadurch gekennzeichnet, dass** in der Wand des Hohlgefäßes (20; 40), neben dem offenen unteren Ende (26) derselben eine Lüftungsöffnung (30) vorgesehen ist.

21. Vorrichtung nach Anspruch 20, **dadurch gekennzeichnet, dass** die Lüftungsöffnung (30) verstellbar ist.

22. Vorrichtung nach Anspruch 21, **dadurch gekennzeichnet, dass** die verstellbare Lüftungsöffnung (30) selektiv entweder offen oder geschlossen ist.

23. Vorrichtung nach Anspruch 21 oder Anspruch 22, **dadurch gekennzeichnet, dass** die verstellbare Lüftungsöffnung (30) eine oder mehrere Öffnung(en) (32) aufweist und mit Einstellmitteln versehen ist, um die wirksame Größe der Öffnung(en) (32) zu variieren.

24. Hohles Gargefäß (20; 40) per se zur Verwendung in einem Verfahren nach Anspruch 1 oder Anspruch 2 zusammen mit Spießen (25; 65) und einer Grillvorrichtung, die einen Behälter (14) einschließt, der eine Hitzequelle (12; 52) enthält,
**dadurch gekennzeichnet, dass** das Hohlgefäß (20; 40) eine einstückige Einheit ist, die ein offenes oberes Ende (24; 64), durch das sich die Spieße (25; 65) erstrecken können, und ein offenes unteres Ende (26), das unmittelbar über der Hitzequelle (12; 52), auf dem oder innerhalb des Rand(es) der oberen Öffnung des Behälters (14) angeordnet wird, aufweist, so dass während des Garverfahrens Hitze aus der Hitzequelle die Öffnung am unteren Ende passieren und in das Hohlgefäß eintreten kann, wobei die Abmessung der Öffnung am unteren Ende im Wesentlichen der vollen durchmessermäßigen Ausdehnung des unteren Endes (26) entspricht;
dass das Hohlgefäß (20; 40) vollständig von der Hitzequelle (15; 52) lösbar und entfembar ist, so dass die Grillvorrichtung so zurückbleibt, dass die Öffnung des Behälters ganz offen ist, und im Wesentlichen in diesem Zustand zur Verwendung als Vorrichtung für das Garen von Nahrungsmitteln auf eine erste Weise bereit steht, jedoch wieder auf den oder innerhalb des Rand(es) der oberen Öffnung des Behälters (14) auf- bzw. einsetzbar ist, so dass die Vorrichtung in einen zweiten Zustand zur Verwendung beim Garen von Nahrungsmitteln auf einen alternative zweite Weise gebracht wird, die ein Garverfahren nach Anspruch 1 oder Anspruch 2 umfasst;
und dass das Hohlgefäß (20; 40) an einer in mittlerer Höhe befindlichen Stelle eine Querschnittsfläche aufweist, die größer ist als am oberen Ende (24; 64), so dass das Hohlgefäß allein oder zusammen mit dem Behälter (14), sofern das Gefäß auf dem Rand der Öffnung des Behälters aufsitzt, eine bauchige Form aufweist, innerhalb der die zweite Weise des Garens gemäß einem Verfahren nach Anspruch 1 oder Anspruch 2 erfolgen kann.

25. Garvorrichtung, die ein Hohlgefaß (20; 40) nach Anspruch 24 umfasst, **dadurch gekennzeichnet, dass** das offene obere Ende (24; 64) des Hohlgefäßes (20; 40) eine Randfläche aufweist, die eine Vielzahl von Einkerbungen einschließt, die bei Gebrauch als seltliche Auflageflächen für die Spieße (25;65) dienen, die durch das obere Ende (24;64) eingeführt sind, so dass dieselben eine im Wesentlichen senkrechte Stellung einnehmen, wobei sich die unteren Spitzen der Spieße (25;65) auf oder über der Hitzequelle (15;55) befinden.

## Revendications

1. Procédé de cuisson de denrées alimentaires (28 ; 68) empalées sur des brochettes (25 ; 65), **caractérisé par le fait que** les brochettes (25 ; 65) sont disposées avec une orientation sensiblement debout sur ou au-dessus d'une source de chaleur (12 ; 52) et **par le fait que** les brochettes (25 ; 65) sont entourées par une chambre creuse (20 ; 40) dotée d'un fond ouvert (26) au-dessus de la source de chaleur (12 ; 52) et d'une partie supérieure ouverte (24 ; 64) à partir de laquelle s'étendent les manches des brochettes (25 ; 65).

2. Procédé selon la revendication 1, dans lequel les extrémités inférieures des brochettes (25 ; 65) reposent sur la source de chaleur (12 ; 52).

3. Appareil destiné à être utilisé dans un procédé tel que défini à la revendication 1 ou à la revendication 2, ledit appareil comprenant une chambre creuse (20 ; 40) ayant une extrémité supérieure ouverte (24 ; 64) et une extrémité inférieure ouverte (26), l'ouverture inférieure (26) étant prévue pour être disposée de façon proximale à et au-dessus de la source de chaleur (12 ; 52) et ayant une surface en coupe transversale supérieure à celle de l'ouverture supérieure (24 ; 64), et comprenant en outre une pluralité de brochettes (25 ; 65) ayant une longueur en accord avec la hauteur de la chambre creuse (20 ; 40) entre ses extrémités supérieure et inférieure (24, 26 ; 64).

4. Appareil selon la revendication 3, **caractérisé par le fait que** la chambre creuse (20 ; 40) est fournie en tant qu' accessoire susceptible d'être monté de façon amovible sur l'appareil de cuisson fournissant la source de chaleur (12 ; 52).

5. Appareil selon la revendication 4, dans lequel ledit appareil de cuisson est un barbecue.

6. Appareil selon l'une quelconque des revendications 3 à 5, dans lequel ladite source de chaleur (12 ; 52) est constituée par une matière pyrogène (15 ; 55).

7. Appareil selon l'une quelconque des revendications 3 à 6, dans lequel la chambre creuse (20 ; 40) est faite de métal.

8. Appareil selon l'une quelconque des revendications 3 à 6, dans lequel la chambre creuse (20 ; 40) est faite d'argile ou autre matière céramique appropriée.

9. Appareil selon l' une quelconque des revendications 3 à 8, dans lequel la surface en coupe transversale de la chambre (20 ; 40) augmente au fur et à mesure que la paroi de la chambre s'étend vers le bas à partir de l'extrémité supérieure (24 ; 64).

10. Appareil selon l' une quelconque des revendications 3 à 9, dans lequel la surface en coupe transversale de la chambre (20 ; 40) est supérieure à un emplacement à hauteur intermédiaire entre l' extrémité supérieure (24 ; 64) et l'extrémité inférieure (26) pour doter la chambre (20 ; 40) d'une forme en bulbe.

11. Appareil selon l'une quelconque des revendications 3 à 9, dans lequel la surface en coupe transversale de la chambre (20 ; 40) est supérieure à un emplacement à hauteur intermédiaire entre l'extrémité supérieure (24 ; 64) de la chambre et le niveau de la source de chaleur (15 ; 55).

12. Appareil selon l'une quelconque des revendications 3 à 11, dans lequel la paroi de la chambre (20 ; 40) est de section transversale sensiblement uniforme de telle sorte que la paroi soit d'épaisseur constante et sa surface extérieure - tournée vers l' environnement ambiant pour un contact avec l'air extérieur - se conforme à sa surface intérieure.

13. Appareil selon l'une quelconque des revendications 3 à 12, dans lequel les brochettes (25 ; 65) sont creuses le long au moins de la majorité de leur longueur.

14. Appareil selon l'une quelconque des revendications 3 à 13, dans lequel la chambre (20 ; 40) a les dimensions suivantes :
- hauteur : dans la plage de 35 à 46 cm, de préférence 40 cm ;
- diamètre maximum : dans la plage de 33 à 43 cm, de préférence 38 cm ;
- diamètre de l'ouverture supérieure (24 ; 64) : dans la plage de 18 à 28 cm, de préférence 23 cm ;
- diamètre de l'ouverture inférieure (26) : dans la plage de 25 à 36 cm, de préférence 30 cm ;
et dans lequel la distance de l'ouverture supérieure (24 ; 64) au plan transversal de la chambre contenant son diamètre maximum est approximativement de la moitié, de préférence légèrement inférieure à la moitié, de la hauteur de la chambre.

15. Appareil selon l'une quelconque des revendications 3 à 14, dans lequel la chambre creuse (20 ; 40) est dotée d'une ou plusieurs poignées externes (61), ce par quoi la chambre (20 ; 40) peut être soulevée pour être placée sur et/ou peut être retirée de la source de chaleur (12 ; 52).

16. Appareil selon l'une quelconque des revendications 3 à 15, dans lequel un couvercle (70) est prévu pour l'extrémité supérieure ouverte (24 ; 64) de la chambre creuse (20 ; 40).

17. Appareil selon la revendication 16, dans lequel des ouvertures (63) de type fentes sont pratiquées dans la limite de l'ouverture supérieure (64) pour permettre l'extension à travers elle des brochettes (25 ; 65).

18. Appareil selon la revendication 16, dans lequel le couvercle (70) est à ouvertures multiples, les ouvertures permettant l' extension à travers elles des brochettes (25 ; 65).

19. Appareil selon la revendication 18, dans lequel les ouvertures sont de forme triangulaire.

20. Appareil selon l' une quelconque des revendications 3 à 19, dans lequel un évent (30) est prévu dans la paroi de la chambre creuse (20 ; 40) au voisinage de son extrémité inférieure ouverte (26).

21. Appareil selon la revendication 20, dans lequel l'évent (30) est ajustable.

22. Appareil selon la revendication 21, dans lequel l'évent ajustable (30) est sélectivement soit ouvert soit fermé.

23. Appareil selon la revendication 21 ou la revendication 22, dans lequel l'évent ajustable (30) a une ou plusieurs ouvertures (32) et est doté de moyens de régulation pour faire varier la dimension effective de sa ou ses ouvertures précitées (32).

24. Chambre de cuisson creuse (20 ; 40) en tant que telle pour être utilisée - avec des brochettes (25 ; 65) et un appareil de barbecue qui comprend une enceinte (14) pour contenir une source de chaleur (12 ; 52) - dans un procédé tel que défini à la revendication 1 ou à la revendication 2,
**caractérisée par le fait que** ladite chambre creuse (20 ; 40) est une unité d'une seule pièce qui a une extrémité supérieure ouverte (24 ; 64) à travers laquelle les brochettes (25 ; 65) peuvent passer, et une extrémité inférieure ouverte (26) pour être disposée - à proximité étroite au-dessus de la source de chaleur (12 ; 52) - sur ou à l'intérieur de la limite de l'embouchure supérieure de ladite enceinte (14) afin de permettre à la chaleur provenant de la source de chaleur de passer à travers l'ouverture au niveau de ladite extrémité inférieure et dans ladite chambre creuse pendant ledit procédé de cuisson, ladite ouverture d'extrémité inférieure ayant une dimension correspondant sensiblement à la pleine étendue diamétrale de l'extrémité inférieure (26) ;
**par le fait que** ladite chambre creuse (20 ; 40) est complètement démontable et apte à être retirée de la source de chaleur (12 ; 52) - pour laisser l'appareil de barbecue avec l' embouchure de l'enceinte totalement ouverte et disponible pour être utilisée sensiblement dans cet état comme appareil pour cuire des denrées alimentaires dans un premier mode - mais est apte à être replacé sur ou à l'intérieur de la limite de ladite embouchure supérieure de l'enceinte (14) pour convertir l'appareil en un second état en vue d'une utilisation dans la cuisson de denrées alimentaires dans un seconde mode alternatif qui comprend un procédé de cuisson tel que défini à la revendication 1 ou à la revendication 2 ;
et **par le fait que** ladite chambre creuse (20 ; 40) a une surface en coupe transversale à un emplacement à hauteur intermédiaire qui est plus grande que celle à l'extrémité supérieure (24 ; 64) de telle sorte que la chambre creuse de par elle-même, ou en liaison avec l' enceinte (14) lorsque la chambre est en appui sur la limite de l'embouchure de l'enceinte, présente une forme de bulbe à l'intérieur de laquelle ledit second mode de cuisson - dans un procédé tel que défini à la revendication 1 ou la revendication 2 - peut avoir lieu.

25. Appareil de cuisson comprenant une chambre creuse (20 ; 40), selon la revendication 24, dans lequel l'extrémité supérieure ouverte (24 ; 64) de la chambre creuse (20 ; 40) a une surface limite comprenant une pluralité d'entailles lesquelles, lors de l'utilisation, fournissent des appuis latéraux pour des brochettes (25 ; 65) introduites à travers l'extrémité supérieure (24 ; 64) pour adopter une orientation généralement debout avec les pointes inférieures des brochettes (25 ; 65) sur ou au-dessus de la source de chaleur (15 ; 55).
